Europäisches Patentamt

European Patent Office

Office européen des brevets

(11) Veröffentlichungsnummer: **0 423 558 A2**

## (12) EUROPÄISCHE PATENTANMELDUNG

(21) Anmeldenummer: 90119122.1

(22) Anmeldetag: 05.10.90

(51) Int. Cl.5: **A62B 9/02**, A61M 16/20

(30) Priorität: 17.10.89 DE 3934559
19.04.90 DE 4012485

(43) Veröffentlichungstag der Anmeldung:
24.04.91 Patentblatt 91/17

(84) Benannte Vertragsstaaten:
**DE FR GB NL**

(71) Anmelder: **Drägerwerk Aktiengesellschaft**
**Moislinger Allee 53-55**
**W-2400 Lübeck 1(DE)**

(72) Erfinder: **Neuber, Thomas**
**Walderseestrasse 35**
**W-2400 Lübeck(DE)**

(54) **Dosiereinrichtung für Lungenautomaten.**

(57) Eine Dosiereinrichtung mit Vordruckkompensation für Lungenautomaten mit einem Ventilkörper für die Gasdosierung, und einem in einem Ausgleichsgehäuse geführten, in einer Dichteinrichtung befindlichen Ausgleichskolben zwischen einem Primär- und Sekundärdruckraum zur Übertragung der Kompensationskraft auf den Ventilkörper soll derat verbessert werden, daß der in einem Dichtmedium befindliche Ausgleichskolben reibungsfrei bewegbar und die Dichteinrichtung einfach befestigbar ist. Dazu ist vorgesehen, daß als Dichteinrichtung eine im Ausgleichsgehäuse (16) feststehende, topfförmige Membran (7) aus nachgiebigem Material vorgesehen ist, welche eine im Auslgeichsgehäuse (16) feststehende, zylindrischen Seitenfläche besitzt, und am Umfang der Seitenfläche einzelne, in Segmente aufgeteilte oder geschlossen umlaufende verdünnte Wandstärkenbereiche als Dichtlippe (22) aufweist.

Fig.1

EP 0 423 558 A2

## DOSIEREINRICHTUNG FÜR LUNGENAUTOMATEN

Die Erfindung betrifft eine Dosiereinrichtung mit Vordruckkompensation für Lungenautomaten mit einem Ventilkörper für die Gasdosierung, und einem in einem Ausgleichsgehäuse geführten, durch eine Dichteinrichtung abgedichteten Ausgleichskolben zwischen einem Primär- und Sekundärdruckraum zur Übertragung der Kompensationskraft auf den Ventilkörper.

Ein Druck-Regulierventil mit Vordruckkompensation ist aus der DE-OS 26 28 371 bekanntgeworden. Das zwischen einem Primärdruckraum und Sekundärdruckraum befindliche Ventil besitzt einen Ventilkörper, der auf einem Ventilsitz aufliegt und mit einem beweglichen Dorn als Ausgleichskolben verbunden ist. Die Vordruckkompensation erfolgt in der Weise, daß vom Versorgungsanschluß für den Primärdruck zwei Kanäle abgezweigt sind, die einerseits den Ventilkörper und andererseits den Ausgleichskolben mit Druck beaufschlagen. Der über den ersten Kanal auf den Ausgleichskolben wirkende Primärdruck drückt den Ventilkörper gegen den Ventilsitz, während der im zweiten Kanal befindliche Primärdruck eine entgegengesetzte Kraft am Ventilkörper erzeugt. Eine vollständige Kompensation ist dann vorhanden, wenn die mit Primärdruck beaufschlagte Querschnittsfläche des Ausgleichskolbens gleich der lichten Querschnittsfläche des Ventilsitzes ist und somit Kräftegleichgewicht zwischen den in axialer Richtung wirkenden resultierenden Primärdruck-Kräften besteht. Der Ausgleichskolben ist in einer zylindrischen Bohrung geführt und mit einem O-Ring als Dichteinrichtung abgedichtet.

Aus der CH-PS 466 051 ist ein lungengesteuertes, vordruckkompensiertes Preßluft-Atmungsgerät bekanntgeworden, das einen Ventilkörper und einen Ausgleichskolben aufweist, welche starr miteinander verbunden sind. Der Primärdruck wirkt sowohl auf den Ventilkörper als auch auf den Ausgleichskolben, so daß die resultierenden Axialkräfte im Gleichgewicht stehen. Der Ausgleichskolben ist in einer zylindrischen Bohrung eines Ausgleichsgehäuses zwischen Primärdruckraum und Sekundärdruckraum geführt und mit einer O-Ring-Dichtung als Dichteinrichtung gasdicht eingesetzt. Zum Öffnen des Ventils drückt ein mit einer Steuermembran verbundener Kipphebel gegen den Ausgleichskolben, wobei der Ventilkörper in Öffnungsstellung gelangt. Das Druckgas strömt dann von dem Primärdruckraum in den Sekundärdruckraum.

Bei diesen Geräten ist von Nachteil, daß zur Verschiebung des Ausgleichskolbens Reibungskräfte überwunden werden müssen, die im wesentlichen durch die O-Ring-Dichtung am Ausgleichskolben verursacht werden. Die Reibungskraft wird außerdem durch den auf den Dichtring wirkenden Primärdruck beeinflußt. Durch den sog. Slip-Stick-Effekt an der Dichteinrichtung entstehen sowohl bei statischer und auch dynamischer Belastung Druckschwankungen auf der Sekundärdruckseite, die den Betrieb, insbesondere von atmungsgesteuerten Dosiergeräten, erschweren.

Aus der DE-AS 11 48 040 ist ein Druckmindererventil mit einem druckkompensierten Ausgleichskolben bekannt, welcher mit einer Stülpmanschette als Dichteinrichtung in das Ausgleichsgehäuse eingesetzt ist. Nachteilig bei der bekannten Anordnung ist, daß zur Befestigung und Abdichtung der Stülpmanschette im Ausgleichsgehäuse eine Ventilscheibe erforderlich ist, die den Befestigungswulst der Stülpmanschette in ein ausgespartes Teil der zylindrischen Wandung des Ausgleichsgehäuses drückt. Durch das Anbringen der Ventilscheibe wird die Montage der Stülpmanschette erschwert.

Aufgabe der Erfindung ist, eine Dosiereinrichtung für einen Lungenautomaten mit Vordruckkompensation so zu verbessern, daß der in einer Dichteinrichtung befindliche Ausgleichskolben reibungsfrei bewegbar ist, die Dichteinrichtung einfach befestigbar und in ihrer Position ohne weitere Hilfsmittel gesichert ist.

Die Aufgabe wird dadurch gelöst, daß als Dichteinrichtung eine topfförmige Membran aus nachgiebigem Material vorgesehen ist, welche eine im Ausgleichsgehäuse feststehende, zylindrische Seitenfläche besitzt und am Umfang der Seitenfläche einzelne, in Segmente aufgeteilte oder geschlossen umlaufende verdünnte Wandstärkenbereiche als Dichtlippe aufweist.

Die mit der Erfindung erzielten Vorteile liegen im wesentlichen darin, daß statt der am Umfang des Ausgleichskolbens befindlichen O-Ring-Dichtung eine elastische, topfförmige Membran, im folgenden als Topfmembran bezeichnet, in das Ausgleichsgehäuse eingesetzt wird, die die Druckräume voneinander trennt und über die verdünnten Wandstärkenbereiche der zylindrischen Seitenfläche die Dichtfunktion übernimmt. Der Ausgleichskolben kann jetzt reibungsfrei in einer Spielpassung im Ausgleichsgehäuse geführt werden, da die Dichtfunktion auf die Topfmembran verlagert wurde und er somit nicht mehr mit der Problematik einer schleifenden Dichtstelle behaftet ist. Der Primärdruck wirkt sowohl auf den Ventilkörper als auch auf die Topfmembran. Eine vollständige Primärdruck-Kompensation ist dann vorhanden, wenn die resultierenden axialen Primärdruck-Kräfte im Gleichgewicht stehen. Ein besonderer Vorteil der Topfmembran liegt darin, daß diese ohne Befestigungsmittel eingesetzt werden kann, da sie in einer ebenfalls zylindrischen Bohrung aufgenommen ist und durch den Primärdruck die zur Abdichtung notwendige allseitige Anpresskraft erfährt. Die Abdichtung der Topfmembran in der zylindrischen Bohrung erfolgt über einzelne, in Segmente aufgeteilte oder geschlossen umlaufende verdünnte Wandstärkenbereiche im zylindrischen Teil der Seitenfläche, die als Dichtlippen wirken und durch den Primärdruck an die Bohrungswand angedrückt werden.

Die verdünnten Wandstärkenbereiche können als grubenförmige Ausnehmungen, oder als eine oder mehrere umlaufende Nuten ausgebildet sein oder sind im einfachsten Fall eine Fase, am auslaufenden Ende der Topfmembran. Die Segmente können kreisförmig oder stabförmig ausgebildet sein, wobei die grubenförmigen Ausnehmnungen bevorzugt an der Innenseite der Seitenfläche der Topfmembran angebracht sind. Die Topfmembran gestattet zudem einen kompakten Aufbau der Dosiereinrichtung; dieses ist bei atmungsgesteuerten Dosierventilen, die von einem Geräteträger mitgeführt werden müssen, besonders zweckmäßig.

Zur Dosierung von Druckgas ist vorgesehen, am Ausgleichskolben einen Kipphebel anzubringen, der in einem Drehpunkt gelagert ist und mit einer Steuermembran in Wirkverbindung steht. Wird die Steuermembran durch ein Steuermedium, z.B. Unterdruck im Sekundärdruckraum, ausgelenkt, bringt der Kipphebel über einen Exzenter den Ventilkörper in Öffnungsstellung, und Druckgas strömt vom Primärdruckraum in den Sekundärdruckraum. Hierbei verformt sich die Stirnfläche der Topfmembran und folgt der Bewegung des Exzenters. Ist der Sekundärdruckraum ausreichend mit Gas gefüllt, geht die Steuermembran in die Ausgangsstellung zurück und der Ventilkörper ist wieder in Schließstellung.

Es ist vorteilhaft, die Topfmembran in eine zylindrische Bohrung im Ausgleichsgehäuse mit einem Anschlag an der Stirnfläche einzusetzen. Der Anschlag ist eine einfache Maßnahme zur Blockierung der Topfmembran im Ausgleichsgehäuse. Zusätzliche Verschraubungen oder Spannvorrichtungen, wie sie bei einer scheibenförmigen Membran notwendig wären, sind nicht erforderlich. Das Einführen der Topfmembran wird erleichtert, wenn die zylindrische Wandung der Topfmembran leicht konisch, sich zur Stirnfläche hin verjüngend, ausgebildet ist.

Zum Andrücken des Ventilkörpers an den Ventilsitz ist in der zylindrischen Bohrung des Ausgleichsgehäuses eine Feder vorgesehen, die sich gegen einen Vorsprung in der Bohrung und über die Innenseite der Stirnfläche der Topfmembran am Ausgleichskolben abstützt. Durch die Feder wird die Stirnfläche der Membran gegen den Ausgleichskolben gedrückt und dadurch in diesem Bereich die Dichtwirkung verstärkt.

Ein Ausführungsbeispiel der Erfindung ist in der schematischen Zeichnung dargestellt und wird im folgenden näher erläutert.

Es zeigen:
Figur 1 eine atmungsgesteuerte Dosiereinrichtung mit Topfmembran im Schnitt,
Figur 2 Einzelheit "Z" der Dosiereinrichtung aus Figur 1 im Schnitt.

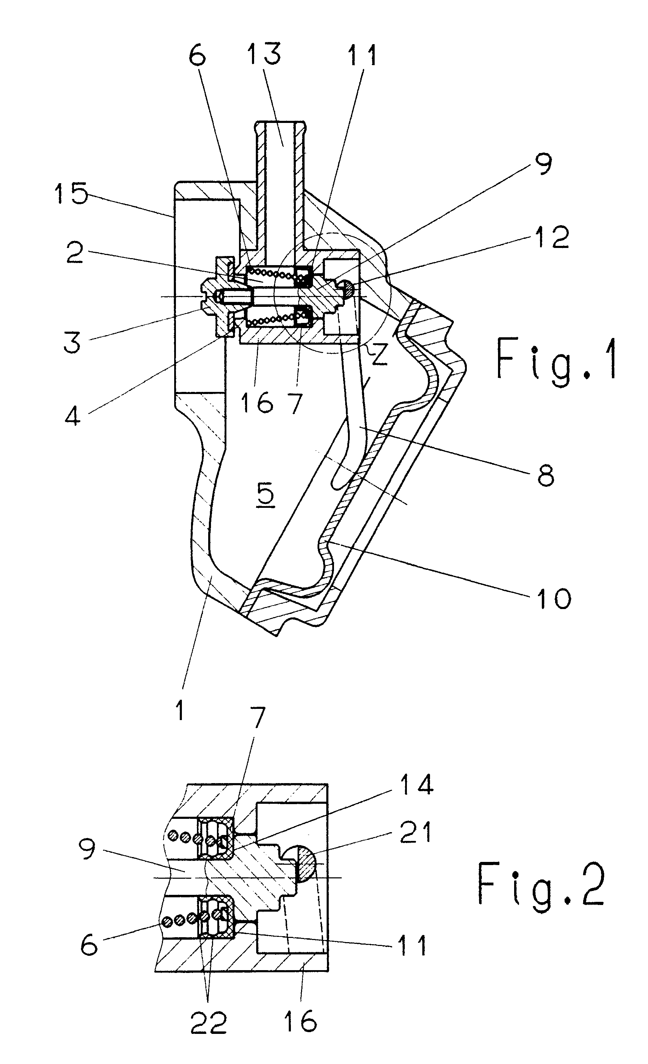

Figur 1 zeigt eine atmungsgesteuerte Dosiereinrichtung in einem Gehäuse (1), das am Anschluß (15) an eine nicht dargestellte Atemmaske und am Primärdruckanschluß (13) an eine ebenfalls nicht dargestellte Druckgasversorgung angeschlossen ist. Über den Primärdruckanschluß (13) wird der Primärdruckraum (2) mit Druckgas beaufschlagt. Das Druckgas gelangt über ein Ventil, bestehend aus Ventilsitz (4) und Ventilkörper (3), in einen Sekundärdruckraum (5). Der Ventilkörper (3) wird mit einer Feder (6) gegen den Ventilsitz (4) gedrückt. Auf der gegenüberliegenden Seite des Ventilkörpers (3) befindet sich ein Ausgleichskolben (9), der über einen Kipphebel (8) betätigbar ist, und eine Topfmembran (7), die zur Primärdruck-Kompensation am Ventilkörper (3) dient. Der Kipphebel (8) ist in einem Drehpunkt (12) gelagert, wobei die Winkelbewegung über einen Exzenter (21), Fig. 2, in eine translatorische Bewegung in Richtung des Ausgleichskolbens (9) umgesetzt wird. Die Topfmembran (7) ist in eine zylindrischen Bohrung im Ausgleichsgehäuse (16) eingesetzt und wird durch den Primärdruck sowohl gegen die zylindrische Wandung der Bohrung als auch gegen den Anschlag (11) gedrückt. Die Primärdruck-Kompensation erfolgt in der Weise, daß der auf den Ventilkörper (3) durch den Primärdruck wirkenden Kraft eine Kompensationskraft entgegenwirkt, die an der Topfmembran (7) entsteht und über den Ausgleichskolben (9) an den Ventilkörper (3) geführt wird. Wird nun die Steuermembran (10) durch ein Steuermedium, z.B. Unterdruck im Sekundärdruckraum (5), ins Gehäuseinnere ausgelenkt, wird der Ventilkörper (3) durch den mit dem Kipphebel (8) verbundenen Exzenter (21) und den Ausgleichskolben (9) vom Ventilsitz (4) gehoben. Die Kompensationskraft ist ständig am Ventilkörper (3) wirksam. Da die Abdichtung zwischen Primärdruckraum (2) und Sekundärdruckraum (5) allein über die Topfmembran (7) erfolgt, kann der Ausgleichskolben (9) reibungsfrei in einer Spielpassung des Ausgleichsgehäuses (16) geführt werden. Ist genug Gas in den Sekundärdruckraum (5) gelangt und der Unterdruck abgebaut, geht der Kipphebel (8) und damit der Ventilkörper (3) in die Ausgangsstellung zurück.

Für die Dichtung des Ventilkörpers (3) auf dem Ventilsitz (4) ist es zweckmäßig, den Ventilkörper (3) mit einem Elastomer zu beschichten.

Figur 2 zeigt die Einzelheit "Z" der Dosiereinrichtung aus Figur 1. Die Topfmembran (7) ist in einer zylindrischen Bohrung im Ausgleichsgehäuse (16) aufgenommen und stößt mit der Stirnfläche (14) gegen den Anschlag (11). Die zylindrische Seitenfläche der Topfmembran (7) ist mit nutförmigen, umlaufenden verdünnten Wandstärkenbereichen versehen, die als Dichtlippen (22) dienen und unter Wirkung des Primärdruckes im Primärdruckraum (2) die Abdichtung bewirken. Der verdünnte Wandstärkenbereich ist im einfachsten Fall eine Fase am auslaufenden Ende der zylindrischen Topfmembran (7).

**Ansprüche**

1. Dosiereinrichtung mit Vordruckkompensation für Lungenautomaten mit einem Ventilkörper für die Gasdosierung, und einem in einem Ausgleichsgehäuse geführten, durch eine Dichteinrichtung abgedichteten Ausgleichskolben zwischen einem Primär- und Sekundärdruckraum zur Übertragung der Kompensationskraft auf den Ventilkörper, dadurch gekennzeichnet, daß als Dichteinrichtung eine topfförmige Membran (7) aus nachgiebigem Material vorgesehen ist, welche eine im Ausgleichsgehäuse (16) feststehende, zylindrische Seitenfläche besitzt, und am Umfang der Seitenfläche einzelne, in Segmente aufgeteilte oder geschlossen umlaufende verdünnte Wandstärkenbereiche als Dichtlippe (22) aufweist.

2. Dosiereinrichtung nach Anspruch 1, dadurch gekennzeichnet, daß die topfförmige Membran (7) in einer zylindrischen Bohrung des Ausgleichsgehäuses (16) aufgenommen ist, die einen Anschlag (11) aufweist, an welchen die Stirnfläche (14) stößt.

3. Dosiereinrichtung nach Anspruch 1 oder 2, dadurch gekennzeichnet, daß die zylindrische Seitenfläche der topfförmigen Membran (7) konisch, sich zur Stirnfläche (14) hin verjüngend, ausgebildet ist.

4. Dosiereinrichtung nach einem der Ansprüche 1 bis 3, dadurch gekennzeichnet, daß in der zylindrischen Bohrung des Ausgleichsgehäuses (16) eine Feder (6) vorgesehen ist, die sich über die Innenseite der Stirnfläche (14) der Membran (7) am Ausgleichskolben (9) abstützt und den Ventilkörper (3) in Schließstellung hält.

Fig.1

Fig.2